# EUROPÄISCHE PATENTSCHRIFT

(11) **EP 2 960 039 B1**
(45) Veröffentlichungstag und Bekanntmachung des Hinweises auf die Patenterteilung: **25.11.2020**
(21) Anmeldenummer: 15001615.2
(22) Anmeldetag: 29.05.2015
(51) Int. Cl.: B29C 45/14

(54) **SPRITZGIESSVERFAHREN ZUR ERZEUGUNG VON DREIDIMENSIONALEN MUSTERN IN KUNSTSTOFFFORMKÖRPERN , EINS SOLCHER KUNSTSTOFFFORMKÖRPERN SOWIE DESSEN VERWENDUNG**
INJECTION MOULDING METHOD FOR CREATING THREE-DIMENSIONAL PATTERNS IN PLASTIC FORM BODIES, SUCH A PLASTIC FORM BODIE AND ITS APPLICATION
PROCÉDÉ DE MOUPLAGE PAR INJECTION DE PRODUCTION DE MOTIFS TRIDIMENSIONNELS DANS DES CORPS MOULÉS EN MATIÈRE PLASTIQUE, UN TEL CORP MOULÉ ET L'APPLICATION DE TEL CORP MOULÉ

(30) Priorität: 24.06.2014 EP 14002158
(43) Veröffentlichungstag der Anmeldung: 30.12.2015
(73) Patentinhaber: Merck Patent GmbH, 64293 Darmstadt (DE)
(72) Erfinder: Schum, Markus, 64385 Reichelsheim (DE); Linzmeier, Rainer, 64846 Gross-Zimmern (DE)

(56) Entgegenhaltungen:
- EP-A1- 2 298 526
- WO-A1-2006/091532
- WO-A1-2010/053142
- WO-A1-2014/044694
- WO-A2-94/03337
- DE-A1-102004 041 833
- DE-A1-102010 034 879
- JP-A- 2000 006 186
- JP-A- 2002 067 078
- US-A- 5 342 666
- US-A1- 2004 209 063
- US-A1- 2006 029 793
- US-A1- 2012 021 182
- US-B1- 6 440 546

## Beschreibung

Die vorliegende Erfindung bezieht sich auf ein Verfahren zur Erzeugung von dreidimensionalen Mustern in Kunststoffformkörpern, insbesondere auf ein Spritzgießverfahren zur Herstellung von polymeren Formkörpern, die auf einer ihrer Oberflächen ein dreidimensionales Muster aufweisen, auf einen polymeren Formkörper, welcher ein solches dreidimensionales Muster aufweist, sowie auf dessen Verwendung.

Dekorative dreidimensionale Muster auf Kunststoffartikeln sind bekannt und bereits seit längerer Zeit im Einsatz. Sie verleihen den genannten Gütern ein exklusives Erscheinungsbild, das Tiefe suggeriert und sich in vorteilhafter Weise von üblichen Musterungen unterscheidet. Häufig werden die Formkörper oder Folien auf mindestens einer ihrer Oberflächen verprägt oder anderweitig strukturiert, um letztendlich ein dreidimensionales Muster aufzuweisen. Um besondere optische Effekte zu erzielen, werden sowohl Formkörper als auch Folien oft mehrschichtig zusammengesetzt und im Schichtverbund verprägt. Darüber hinaus können sie noch mit funktionellen und/oder dekorativen Beschichtungen, gewöhnlich in Form von Lacken, versehen werden, die gegebenenfalls auch Metalleffektpigmente und dergleichen enthalten können, um beispielsweise den Glanz der dreidimensionalen Strukturen zu erhöhen.

Solche Strukturierungen sind aber meist mit hohem apparativen Aufwand verbunden, da Prägewerkzeuge oder andere aufwändige Strukturierungsmaßnahmen in den in der Regel mehrstufigen Verfahrensablauf der Produktherstellung integriert werden müssen, was insbesondere dann mit Mühe und Kosten verbunden ist, wenn die strukturierte Schicht anschließend noch weiter beschichtet werden soll.

So sind beispielsweise aus der JP-A-07-137221 und aus der JP-A-05-092538, der JP 2002 067078, der WO 2010/053142 oder der DE 10 2010 034879 dekorative Schichtsysteme bekannt, die jeweils zwischen einem polymeren Substrat und einer polymeren Deckschicht verprägte oder anderweitig strukturierte Schichten enthalten, in denen auch Glanzpigmente, meist über Druckfarben aufgebracht, enthalten sein können. Das Herstellen solcher Verbundmaterialien erfordert eine Vielzahl von verschiedenen Arbeitsschritten sowie das aufwändige Laminieren oder anderweitige Verbinden unterschiedlicher Materiallagen miteinander. Da es sich in den beiden genannten Fällen um die Nachbildung von natürlichen Holzmaserungen handelt, sind kleinere Unkorrektheiten beim verbindenden Übereinanderlegen der verschiedenen Materiallagen möglicherweise optisch nicht mit großen Nachteilen verbunden. Sollen die zu erzielenden Musterungen jedoch präzise, definierte Formen annehmen, ist ein sehr genaues Arbeiten erforderlich, was erhöhte Aufwendungen für den Produktionsprozess und damit auch die Produktionskosten zur Folge hat. Ein einfacheres Verfahren zur Herstellung von Zierfolien und damit verzierten Formkörpern wurde daher bereits in EP 1 669 191 B1 vorgeschlagen. Dort wird ein Laminat aus einer transparenten Harzsubstratfolie und einer glänzenden Schicht, die auf der Rückseite der Harzsubstratfolie aufgebracht ist, so verprägt, dass zumindest auf der die glänzende Schicht tragenden Rückseite Erhebungen und/oder Vertiefungen entstehen, die zu Abschnitten mit relativ hohem und niedrigem Glanz auf der Vorderseite der Folie führen. Das so erhaltene Laminat wird separat verformt und kann anschließend in einem Spritzgießverfahren mit einem Gießharz so verbunden werden, dass ein geformter, verzierter Formkörper entsteht. Die Glanzschicht auf der Rückseite der Zierfolie wird hierbei über eine Druckfarbe, die Metallpigmente enthält, oder über das verdampfende Abscheiden eines dünnen Metallfilms auf die transparente Harzsubstratfolie aufgebracht.

Obwohl auf diese Weise Zierfolien und Formkörper mit dreidimensional erscheinendem Muster erhalten werden können, die auf ihrer Oberfläche abwechselnd glänzende und weniger glänzende Oberflächenabschnitte aufweisen, ist für deren Herstellung zunächst das Erzeugen eines Laminats sowie dessen separate Verprägung und Verformung erforderlich, bevor das Laminat in einem weiteren Arbeitsgang mit einem Gießharz zu dem gewünschten Formkörper verbunden werden kann. Da zumindest beim letzten Arbeitsschritt hohe Temperaturen erforderlich sind um die Zierfolie mit dem Gießharz zu verbinden, ist eine Beschädigung der vorab hergestellten Prägestrukturen wahrscheinlich, was den optischen Eindruck des Endproduktes beeinträchtigen kann. Außerdem lassen sich definierte Prägemuster mit hoher Linienpräzision über die hier immer noch vorhandene Vielzahl verschiedener Arbeitsschritte nur mit sehr großem apparativen Aufwand herstellen.

Es besteht daher immer noch ein Bedarf an einem einfachen, schnellen und kostengünstigen Herstellungsverfahren für polymere Formkörper, die auf ihrer Oberfläche ein dreidimensionales oder ein dreidimensional erscheinendes Muster aufweisen, welches mit wenigen Verfahrensschritten ausführbar ist und zu attraktiven, glänzenden, dreidimensionalen bzw. dreidimensional erscheinenden Musterungen auf der Oberfläche der Formkörper führt, sowie an derart hergestellten Formkörpern.

Die Aufgabe der vorliegenden Erfindung besteht daher darin, ein Verfahren zur Verfügung zu stellen, welches die Herstellung von hoch definierten, glänzenden, dreidimensionalen oder dreidimensional erscheinenden Mustern mit feinen Linienstrukturen auf polymeren Formkörpern in wenigen Arbeitsschritten mittels an sich bekannter Verformungsverfahren und -apparaturen erlaubt.

Eine weitere Aufgabe der vorliegenden Erfindung besteht darin, polymere Formkörper bereitzustellen, die auf mindestens einer ihrer Oberflächen ein solches glänzendes, dreidimensionales oder dreidimensional erscheinendes Muster mit feinen Linienstrukturen aufweisen.

Eine zusätzliche Aufgabe der vorliegenden Erfindung besteht darin, die Verwendung der derart erzeugten Formkörper aufzuzeigen.

Die Aufgabe der vorliegenden Erfindung wird gelöst durch ein Spritzgießverfahren zur Herstellung eines polymeren Formkörpers, welcher auf mindestens einer seiner Oberflächen ein dreidimensionales Muster aufweist, gemäß Anspruch 1.

Des Weiteren wird die Aufgabe der Erfindung gelöst durch einen polymeren Formkörper mit einer Oberfläche B" und einer ein dreidimensionales Muster aufweisenden Oberfläche A" gemäß Anspruch 9.

Darüber hinaus wird die Aufgabe der Erfindung auch gelöst durch die Verwendung des vorab beschriebenen polymeren Formkörpers als dekoratives und/oder funktionelles Element in Gebrauchsgütern. Gegenstand der vorliegenden Erfindung ist daher ein Spritzgießverfahren zur Herstellung eines polymeren Formkörpers, welcher mindestens eine ein dreidimensionales Muster aufweisende Oberfläche aufweist.

Das erfindungsgemäße Spritzgießverfahren entspricht im Wesentlichen einem üblichen Spritzgießverfahren, bei dem eine teilbare Spritzgießform eingesetzt wird, deren innerer Hohlraum der endgültigen Form des herzustellenden Formkörpers entspricht. In diesen Hohlraum wird eine Kunststoffschmelze eingetragen und anschließend verfestigen gelassen. Anschließend wird der erzeugte polymere Formkörper aus der geöffneten Spritzgießform entformt oder dieser entnommen.

Für das erfindungsgemäße Verfahren wird die übliche Spritzgießform so modifiziert, dass sie in einer der Spritzgießteilformen (Spritzgießteilform A) eine Oberfläche aufweist, die auf einer Grundfläche Erhebungen und/oder Vertiefungen aufweist, die ein dreidimensionales Muster bilden. Dieses Muster ist vorzugsweise makroskopisch sichtbar und liegt beispielsweise in Form eines figürlichen Objektes, eines alphanumerischen Motivs, eines Strich- und/oder Punktmusters, eines Logos, einer Codierung oder eines Fantasiemusters vor. Dabei ist es im Rahmen der vorliegenden Erfindung von Bedeutung, dass das dreidimensionale Muster auf der Oberfläche A' vorzugsweise nicht mit der äußeren Formgebung des zu erzeugenden polymeren Formkörpers übereinstimmt, der von der Teilform A gebildet wird. Daher kann die Grundfläche A', die erfindungsgemäß das dreidimensionale Muster in der Spritzgießteilform A trägt, auch als solche gewölbt oder anderweitig mit Aus- und/oder Einbuchtungen versehen sein, die die äußere Form des zu erzeugenden polymeren Formkörpers bestimmen, der von dieser Teilform erzeugt wird. Diese Wölbungen bzw. Aus- und/oder Einbuchtungen in der Oberfläche A' sind vorzugsweise nicht identisch mit dem erfindungsgemäß erzeugten dreidimensionalen Muster. Vielmehr liegt das erfindungsgemäß erzeugte dreidimensionale Muster vorzugsweise zusätzlich zu den die äußere Formgebung des zu erzeugenden polymeren Formteils bestimmenden Erhebungen und/oder Aus- und/oder Einbuchtungen, sofern vorhanden, auf der Oberfläche A' vor. Strukturell ist daher die Grundfläche der Oberfläche A' als plane Fläche anzusehen, die in Bezug auf ihre Oberflächenbeschaffenheit eine glatte, ebene Struktur aufweist. Auch die innere Oberfläche B' der Spritzgießteilform B stellt vorzugsweise eine solche "plane Oberfläche" dar. Die innere Oberfläche B' kann demzufolge ebenso Krümmungen oder Aus- und Einbuchtungen aufweisen, die die äußere Form des von dieser Teilform zu erzeugenden Teils des polymeren Formkörpers bestimmen. Als "plane Oberfläche" wird erfindungsgemäß eine Oberfläche verstanden, die in ihrer Struktur glatt, eben und vorzugsweise ohne sichtbare Rauigkeit ausgebildet ist, ohne Rücksicht auf ihre äußere Formgebung.

In einer weiteren Ausführungsform der vorliegenden Erfindung kann jedoch auch die innere Oberfläche B' derart ausgebildet sein, dass sie ebenfalls ein dreidimensionales Muster gemäß der vorliegenden Erfindung aufweist.

Das dreidimensionale Muster auf der Oberfläche A' weist Erhebungen und/oder Vertiefungen auf, die eine Höhe/Tiefe ab etwa 10 µm bis zu einigen Zentimetern und Linienbreiten von 100 µm bis 2000 µm aufweisen können. Die flächenmäßige Ausdehnung des dreidimensionalen Musters kann von wenigen Quadratmillimetern bis zu einigen hundert Quadratzentimetern reichen. Dabei richten sich diese Maße im wesentlichen nach der Größe und Wanddicke des zu erzeugenden polymeren Formkörpers, nach der Dicke der thermoplastischen Folie sowie nach der Funktion, die das dreidimensionale Muster im polymeren Formkörper erfüllen soll und können entsprechend angepasst werden.

Das dreidimensionale Muster kann in die Spritzgießteilform A entweder direkt oder aber über einen entsprechend angepassten Einsatz eingebracht werden. Letzteres ist von Vorteil, da solche Einsätze auswechselbar erzeugt werden können und auf diese Art über einen schnellen und bequemen Austausch der Mustereinsätze formgleiche polymere Formkörper mit verschiedensten dreidimensionalen Motiven erhalten werden können.

An der inneren Oberfläche A' wird erfindungsgemäß bei geöffnetem Spritzgießwerkzeug eine thermoplastische Folie fixiert, die mit plättchenförmigen Effektpigmenten pigmentiert ist. Dabei muss die äußere Form der Folie sowie deren geometrische Dicke so gestaltet sein, dass sich die Folie in die Spritzgießteilform A einbringen und an deren innerer Oberfläche A' auch fixieren lässt. Diese temporäre Fixierung erfolgt dabei vorteilhafterweise über das Anlegen eines Vakuums, über punktuelle, unter erhöhter Temperatureinwirkung leicht lösbare Klebestellen oder andere geeignete, temporäre Fixiermaßnahmen wie beispielsweise Klammern oder Rahmen.

Als polymeres Kunststoffmaterial für die thermoplastische Folie kommen die üblichen thermoplastischen Kunststoffmaterialien in Frage, wie beispielsweise Polystyrol (PS), Polypropylen (PP), Polycarbonat (PC), Polymethylmethacrylat (PMMA), Styrol-Acrylnitril (SAN), verschiedene thermoplastische Elastomere (TPEs) oder Acrylnitril-Butadien-Styrol (ABS), um nur einige zu nennen. Es können auch noch weitere, von den vorab genannten verschiedene Co-Polymerisate eingesetzt werden, die die oben genannten Polymere enthalten.

Die aus den thermoplastischen Kunststoffmaterialien geformten Folien sind erfindungsgemäß mit plättchenförmigen Effektpigmenten pigmentiert. Dabei können die plättchenförmigen Effektpigmente auf verschiedene Weise in die thermoplastische Folie ein- oder auf diese aufgebracht werden. So können die plättchenförmigen Effektpigmente als Bestandteil einer Druckfarbe oder einer Beschichtungszusammensetzung auf eine Oberfläche der thermoplastischen Folie voll- oder teilflächig aufgebracht werden, sie können jedoch auch, sofern es sich um Metalleffektpigmente handelt, mit Hilfe eines Verdampfungsverfahrens auf die Oberfläche der Folie aufgebracht werden. Vorzugsweise erfolgt jeweils eine vollflächige Beschichtung. Die für die verschiedenen Beschichtungsverfahren nötigen Verfahrensschritte und Materialien sind dem Fachmann geläufig und müssen hier nicht genauer beschrieben werden.

Entsprechend Anspruch 1 und 9 erfolgt das Pigmentieren der thermoplastischen Folie über die Masseeinfärbung der Folie. Das bedeutet, dass bereits bei der Folienherstellung den polymeren Kunststoffen plättchenförmige Effektpigmente in geeigneter Form und Menge zugegeben werden, die zusammen mit den Kunststoffen zu Folien verarbeitet werden, was in der Regel durch Extrusion geschieht. Dies kann durch direkte Zugabe von plättchenförmigen Effektpigmenten zu Kunststoffgranulaten oder auch durch die Herstellung von Effektpigment-haltigen Compounds oder durch Masterbatches mit anschließendem gemeinsamen Granulieren erfolgen.

Es ist auch die kombinierte Pigmentierung der Folie mit Hilfe einer Masseeinfärbung und einem zusätzlichen Bedruckungs- oder Beschichtungsverfahren möglich.

Die erfindungsgemäß eingesetzte pigmentierte thermoplastische Kunststofffolie enthält die plättchenförmigen Effektpigmente in einer Menge von 0,1 bis 20 Gew.-%, bezogen auf das Gesamtgewicht der pigmentierten Folie. Dabei sind Anteile von 0,5 bis 5 Gew.-% besonders bevorzugt. Alle Pigmentanteile beziehen sich dabei auf die pigmentierte Folie, d.h. auf die beschichtete, bedruckte oder masseeingefärbte Folie.

Zusätzlich zu den plättchenförmigen Effektpigmenten kann die pigmentierte thermoplastische Folie noch weitere anorganische oder organische Farbpigmente, Farbstoffe und/oder Füllmittel enthalten. Dabei kommen die üblichen, allgemein für die Einfärbung von Kunststofffolien oder Druckfarben bzw. Beschichtungszusammensetzungen eingesetzten Farbmittel und Füllstoffe in Betracht, solange sie die optischen Effekte, die durch die plättchenförmigen Effektpigmente erzielt werden, nicht nachhaltig behindern. Für bestimmte Polymere, beispielsweise PET, sind organische Farbstoffe bevorzugt, die in der polymeren Kunststoffmasse löslich sind und die resultierenden Folien gleichmäßig einfärben, ohne einen störenden partikulären Charakter aufzuweisen.

Andere Polymerfolien bzw. Bindemittel lassen sich auch mit organischen oder anorganischen Farbpigmenten oder Füllstoffen in Partikelform versehen.

Als plättchenförmige Effektpigmente im Verfahren gemäß der vorliegenden Erfindung können alle bekannten plättchenförmigen Effektpigmente eingesetzt werden, solange diese in oder auf der thermoplastischen Folie sichtbar sind. Solche plättchenförmigen Effektpigmente werden vorteilhafterweise ausgewählt aus der Gruppe Perlglanzpigmente, Interferenzpigmente, Metalleffektpigmente, plättchenförmige funktionelle Pigmente, plättchenförmige strukturierte Pigmente, oder einem Gemisch aus diesen. Diese Effektpigmente sind aus einer oder mehreren Schichten aus voneinander unterschiedlichen Materialien aufgebaut und liegen plättchenförmig vor.

Bevorzugt weisen diese Pigmente ein plättchenförmiges Substrat auf, auf welchem sich eine oder mehrere Schichten befinden, wobei sich zumindest das Substrat und die sich direkt auf dem Substrat befindliche Schicht und/oder mindestens zwei jeweils benachbarte Schichten der Beschichtung untereinander in ihren Brechzahlen n mindestens um den Wert Δn=0,1 unterscheiden. Bei den sich auf dem Substrat befindlichen Schichten handelt es sich dabei vorzugsweise um Metalle, Metalloxide, Metalloxidhydrate oder deren Gemische, Metallmischoxide, -suboxide, -oxinitride, Metallfluoride oder Polymermaterialien.

Perlglanzpigmente bestehen aus transparenten Plättchen mit hoher Brechzahl und zeigen bei paralleler Orientierung durch Mehrfachreflexion einen charakteristischen Perlglanz. Solche Perlglanzpigmente, die zusätzlich auch Interferenzfarben zeigen, werden als Interferenzpigmente bezeichnet.

Obwohl natürlich auch klassische Perlglanzpigmente wie TiO₂-Plättchen, basisches Bleicarbonat, BiOCI-Pigmente oder Fischsilberpigmente prinzipiell geeignet sind, werden als Effektpigmente im Sinne der Erfindung vorzugsweise plättchenförmige Interferenzpigmente oder Metalleffektpigmente eingesetzt, welche auf einem plättchenförmigen Substrat mindestens eine Beschichtung aus einem Metall, Metalloxid, Metalloxidhydrat oder deren Gemischen, einem Metallmischoxid, Metallsuboxid, Metalloxinitrid, Metallfluorid oder einem Polymer aufweisen.

Die Metalleffektpigmente weisen bevorzugt mindestens ein Metallsubstrat oder eine Metallschicht auf.

Das plättchenförmige Substrat besteht vorzugsweise aus natürlichem oder synthetischem Glimmer, Kaolin oder einem anderen Schichtsilikat, aus Glas, Calcium-Aluminium-Borosilikat, SiO₂, TiO₂, Al₂O₃, Fe₂O₃, Polymerplättchen, Graphitplättchen oder aus Metallplättchen, wie beispielsweise aus Aluminium, Titan, Bronze, Silber, Kupfer, Gold, Stahl oder diversen Metalllegierungen.

Besonders bevorzugt sind plättchenförmige Substrate aus Glimmer, Glas, Calcium-Aluminium-Borosilikat, Graphit, SiO₂, Al₂O₃, oder aus Aluminium.

Die Größe der plättchenförmigen Substrate ist an sich nicht kritisch, jedoch müssen die plättchenförmigen Effektpigmente in oder auf der thermoplastischen Folie sichtbar sein und sich mit oder in der Folie orientieren lassen. Die Substrate weisen in der Regel eine Dicke zwischen 0,01 und 5 µm, insbesondere zwischen 0,05 und 4,5 µm und besonders bevorzugt von 0,1 bis 1 µm auf. Die Ausdehnung in der Länge bzw. Breite beträgt üblicherweise von 5 bis 250 µm, vorzugsweise von 5 bis 100 µm und insbesondere von 5 bis 125 µm. Sie besitzen in der Regel ein Aspektverhältnis (Verhältnis des mittleren Durchmessers zur mittleren Teilchendicke) von mindestens 2:1, vorzugsweise von von 3:1 bis 500:1 und insbesondere von 6:1 bis 250:1.

Die genannten Maße für die plättchenförmigen Substrate gelten prinzipiell auch für die erfindungsgemäß verwendeten beschichteten Effektpigmente, da die zusätzlichen Beschichtungen in der Regel im Bereich von nur wenigen Hundert Nanometern liegen und damit die Dicke oder Länge bzw. Breite (Teilchengröße) oder Dicke der Pigmente nicht wesentlich beeinflussen.

Bevorzugt besteht eine auf dem Träger aufgebrachte Beschichtung aus Metallen, Metalloxiden, Metallmischoxiden, Metallsuboxiden oder Metallfluoriden und insbesondere aus einem farblosen oder farbigen Metalloxid, ausgewählt aus TiO₂, Titansuboxiden, Titanoxinitriden, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemischen.

Beschichtungen aus Metallen sind vorzugsweise aus Aluminium, Titan, Chrom, Nickel, Silber, Zink, Molybdän, Tantal, Wolfram, Palladium, Kupfer, Gold, Platin oder diese enthaltenden Legierungen.

Als Metallfluorid wird bevorzugt MgF₂ eingesetzt.

Besonders bevorzugt sind Effektpigmente, welche ein plättchenförmiges Substrat aus Glimmer, Glas, Calcium-Aluminium-Borosilikat, Graphit, SiO₂, Al₂O₃, oder aus Aluminium und mindestens eine Schicht auf dem Substrat aufweisen, welche aus TiO₂, Titansuboxiden, Titanoxinitriden, Fe₂O₃, Fe₃O₄, SnO₂, Sb₂O₃, SiO₂, Al₂O₃, MgF₂, ZrO₂, B₂O₃, Cr₂O₃, ZnO, CuO, NiO oder deren Gemischen ausgewählt ist.

Die Effektpigmente können einen Mehrschichtaufbau aufweisen, bei dem sich auf einem metallischen oder nichtmetallischen Träger mehrere Schichten übereinander befinden, die vorzugsweise aus den vorab genannten Materialien bestehen und verschiedene Brechzahlen in der Art aufweisen, dass sich jeweils mindestens zwei Schichten unterschiedlicher Brechzahl abwechselnd auf dem Träger befinden, wobei sich die Brechzahlen in den einzelnen Schichten um wenigstens 0,1 und bevorzugt um wenigstens 0,3 voneinander unterscheiden. Dabei können die auf dem Träger befindlichen Schichten sowohl farblos als auch farbig, überwiegend transparent, semitransparent oder auch opak sein.

Je nach verwendetem Substratmaterial und Art der aufgebrachten Schichten sind damit auch die erhaltenen Effektpigmente farblos oder weisen eine Körperfarbe auf, bzw. sind überwiegend transparent, semitransparent oder opak. Durch das Ein- oder Mehrschichtsystem auf dem Substrat sind sie aber zusätzlich in der Lage, mehr oder weniger intensive und glänzende Interferenzfarben zu erzeugen.

Ebenso können auch als holographische Pigmente bezeichnete Polymer- oder Metallplättchen als plättchenförmige Effektpigmente eingesetzt werden. Darüber hinaus können auch plättchenförmige Effektpigmente eingesetzt werden, deren Materialauswahl in Substrat oder Beschichtung zusätzlich zu magnetischen, elektrisch leitfähigen, fluoreszierenden oder anderen funktionellen Eigenschaften der entsprechenden Effektpigmente führt.

Die vorab beschriebenen Effektpigmente können in der erfindungsgemäß eingesetzten pigmentierten thermoplastischen Folie einzeln oder als Gemisch von zwei oder mehreren vorhanden sein.

Als Effektpigmente können beispielsweise die im Handel erhältlichen funktionellen Pigmente, Interferenzpigmente oder Perlglanzpigmente, welche unter den Bezeichnungen Iriodin®, Colorstream®, Xirallic®, Miraval®, Ronastar®, Biflair®, Minatec®, Lustrepak®, Colorcrypt®, Colorcode® und Securalic® von der Firma Merck KGaA angeboten werden, Mearlin® der Firma Mearl, Metalleffektpigmente der Firma Eckart sowie optisch variable Effektpigmente wie beispielsweise Variochrom® der Firma BASF, Chromafflair® der Firma Flex Products Inc., Helicone® der Firma Wacker, holographische Pigmente der Firma Spectratec sowie andere kommerziell erhältliche Effektpigmente eingesetzt werden.

Die geometrische Dicke der erfindungsgemäß eingesetzten pigmentierten thermoplastischen Folie kann in einem breiten Bereich variieren und liegt vorzugsweise im Bereich von 20 bis 2000 µm, insbesondere von 50 bis 500 µm. Diese Angaben beziehen sich sowohl auf bedruckte/beschichtete als auch auf masseeingefärbte Folien.

Nachdem die mit den plättchenförmigen Effektpigmenten pigmentierte thermoplastische Folie an der Oberfläche A' fixiert ist, wird das Spritzgießwerkzeug geschlossen und eine transparente thermoplastische Kunststoffschmelze in den zwischen der thermoplastischen Folie und der Oberfläche B' der Spritzgießteilform B verbleibenden Hohlraum der Spritzgießform eingetragen. Dabei stellt die Spritzgießteilform A mit der inneren Oberfläche A' die Auswerferseite und die Spritzgießteilform B mit der inneren Oberfläche B' die Düsenseite der Spritzgießform dar. Nach dem Eintragen der Kunststoffschmelze in den Hohlraum wird dieser von der Kunststoffschmelze vollständig ausgefüllt. Das Eintragen der transparenten Kunststoffschmelze in den Hohlraum der Spritzgießform erfolgt vorzugsweise bei erhöhtem Druck und erhöhter Temperatur, jeweils abhängig von den verwendeten Materialien. Die Temperatur der Kunststoffschmelze liegt dabei mindestens so hoch wie die Glasübergangstemperatur T_{G} des Kunststoffanteils der thermoplastischen Folie und bevorzugt darüber. Durch die Einwirkung der heißen Kunststoffschmelze und den Druck, den die geschmolzene transparente Kunststoffmasse während des Einbringens in den Hohlraum der Spritzgießform auf die pigmentierte thermoplastische Folie ausübt, erreicht die thermoplastische Folie eine Temperatur, die eine mechanische Verformung der Folie zulässt. Die konkrete Arbeitstemperatur hängt jeweils von den verarbeiteten Kunststoffen ab und liegt gewöhnlich im Bereich von 120°C bis 400°C, vorzugsweise von 200°C bis 280°C. Auch der im Verfahren während des Eintragens der thermoplastischen Kunststoffschmelze in den Hohlraum der Spritzgießform eingesetzte Druck ist jeweils maschinen- und materialabhängig und liegt üblicherweise im Bereich von 100 bis 2500 bar (1x10⁷ N/m² bis 2,5x10⁸ N/m²).

Während des Eintragens der transparenten thermoplastischen Kunststoffschmelze in die Spritzgießform erwärmt sich die thermoplastische Folie, die an der Oberfläche A' fixiert ist, soweit, dass sie mechanisch verformbar wird und sich formschlüssig an die innere Oberfläche A' anschmiegen kann. Dadurch wird das in A' vorhandene dreidimensionale Muster auf der der Oberfläche A' zugewandten Oberfläche der Folie repliziert, und zwar in Form des Negativs des auf der Oberfläche A' vorhandenen dreidimensionalen Musters. Gleichzeitig fließt die heiße Kunststoffschmelze in den Hohlraum zwischen der thermoplastischen Folie und der inneren Oberfläche B' und "übergießt" das dreidimensionale Positiv-Muster, welches sich zeitgleich auf der in den Hohlraum ragenden Oberfläche der thermoplastischen Folie ausgebildet hat. Beim nachfolgenden Aushärten des entstandenen Formkörpers entsteht eine haftfeste, formschlüssige Verbindung zwischen der mit plättchenförmigen Effektpigmenten pigmentierten thermoplastischen Folie und dem Kunststoff, der aus der transparenten thermoplastischen Kunststoffschmelze gebildet wird, die im nachfolgenden Abkühlungs- bzw. Temperiervorgang manifestiert wird. Ist der Formkörper ausreichend ausgehärtet, kann er entformt oder dem Spritzgießwerkzeug entnommen werden. Er weist auf seiner von der thermoplastischen Folie gebildeten äußeren Oberfläche (A") ein dreidimensionales Muster auf, welches dem Negativbild des dreidimensionalen Musters entspricht, welches auf der Oberfläche A' im Inneren der Spritzgießform vorhanden ist. Wird die von der inneren Oberfläche B' geformte Oberfläche B" des polymeren Kunststoffkörpers, die aus dem thermoplastischen Kunststoff besteht, der aus der transparenten thermoplastischen Kunststoffschmelze durch Aushärten entsteht, als Sichtseite verwendet und ist die gehärtete Kunststoffschmelze transparent, kann von der Oberfläche B" aus ein wie in der Tiefe liegendes dreidimensionales Muster wahrgenommen werden, welches in seiner Form dem auf der inneren Oberfläche A' der Spritzgießform vorhandenen Muster identisch entspricht. Je nach äußerer Formgebung der inneren Oberfläche B' sowie deren Oberflächenbeschaffenheit kann die Oberfläche B" des polymeren Formkörpers glatt und eben oder grob- und/oder feinstrukturiert beschaffen sein.

Die Farbgebung, Funktionalität und das Glanzverhalten des dreidimensionalen Musters entspricht dabei der Farbgebung, Funktionalität und dem Glanzverhalten der gesamten Oberfläche A", die durch die pigmentierte thermoplastische Folie gebildet wird. Das bedeutet, dass sich das Glanzverhalten des dreidimensional gemusterten Teils der Oberfläche A" im Glanzwinkel nicht vom Glanzverhalten des nicht gemusterten Teils der Oberfläche A" (gebildet von der Grundfläche A') unterscheidet, unabhängig davon, welche Teilfläche des dreidimensionalen Musters betrachtet wird.

Farbgebung, Funktionalität und Glanzverhalten der Oberfläche A" werden von den in der pigmentierten thermoplastischen Folie enthaltenen plättchenförmigen Effektpigmenten entscheidend geprägt, gegebenenfalls ergänzt durch zusätzliche Farbmittel und/oder Füllstoffe, die sich noch in oder auf der thermoplastischen Folie befinden.

Enthält die transparente thermoplastische Kunststoffschmelze ein lösliches Farbmittel oder geringe Mengen eines partikulären Farbmittels, kann der von der Seite der Oberfläche B" aus wahrnehmbare koloristische Eindruck des dreidimensionalen Musters und der dieses umgebenden Oberfläche A" noch wunschgemäß modifiziert werden. Lösliche Farbmittel führen zwar zu einer eigenen Farbigkeit der thermoplastischen Kunststoffschmelze und des damit hergestellten Teils des polymeren Kunststoffkörpers, behindern jedoch die Transparenz dieses Teils des Kunststoffkörpers kaum oder gar nicht.

Die transparente thermoplastische Kunststoffschmelze besteht (ggf. neben üblichen Füll- und Hilfsstoffen sowie Farbmittel wie beschrieben) aus thermoplastischen Kunststoffen. Diese können, wie bereits oben bezüglich der thermoplastischen Folien beschrieben, aus üblichen thermoplastischen Kunststoffen bestehen und umfassen dieselben Stoffgruppen wie oben dargelegt. Vorzugsweise sind die in der thermoplastische Folie und in der thermoplastischen Kunststoffschmelze eingesetzten Kunststoffmaterialien identisch, teilidentisch oder zumindest ähnlich in ihren Schmelztemperaturen und ihrem Schmelzverhalten, um die vollständige stoffliche Verbindung der beiden Stoffgruppen während des Spritzgießverfahres zu erleichtern und eine unlösbare, haftfeste und formschlüssige Verbindung zu ermöglichen. Allerdings ist es für die Durchführung des erfindungsgemäßen Verfahrens ausreichend, wenn die Temperatur der transparenten thermoplastischen Kunststoffschmelze mindestens den Wert der Glasübergangstemperatur T_{G} des Kunststoffanteils der pigmentierten thermoplastischen Folie aufweist. Entsprechend dieser Voraussetzung können die Ausgangsstoffe für die thermoplastische Folie und die transparente thermoplastische Schmelze ausgewählt werden.

Für den Fall, dass die Notwendigkeit besteht, für die mit plättchenförmigen Effektpigmenten pigmentierte thermoplastische Folie und die thermoplastische Kunststoffschmelze Kunststoffmaterialien einzusetzen, die sich in Schmelztemperatur und Schmelzverhalten zu stark unterscheiden bzw. die obigen Bedingungen an Glasübergangstemperatur und Schmelztemperatur nicht erfüllen, kann eine auf der in den Hohlraum der Spritzgießform ragenden Oberfläche der thermoplastischen Folie aufgebrachte haftvermittelnde Schicht bei der thermischen Verbindung von Folie und Schmelze hilfreich sein. Dies gilt auch für eine thermische Nichtkompatibilität der Bindemittelsysteme einer pigmentierten Druckschicht oder Beschichtung auf der thermoplastischen Folie, da sich die Druckschicht oder Beschichtung, sofern vorhanden, vorzugsweise auf der in den Hohlraum der Spritzgießform ragenden Oberfläche der thermoplastischen Folie befinden. Die haftvermittelnde Schicht sorgt für eine unlösbare Verbindung von Folie und Kunststoffschmelze und kann von Fachmann an Hand seines Fachwissens ausgewählt werden.

Durch das Verformen der mit den plättchenförmigen Effektpigmenten pigmentierten thermoplastischen Folie während des Spritzgießprozesses an der inneren Oberfläche A' ergibt sich eine räumliche Neuorientierung der in der Folie enthaltenen plättchenförmigen Effektpigmente. Diese liegen, bedingt durch die mechanische Längsausrichtung der Krafteinwirkung beim Folienherstellungsprozess oder beim Bedruck- bzw. Beschichtungsvorgang, in oder auf der pigmentierten Folie üblicherweise mit ihren Längsachsen weitestgehend in etwa paralleler Ausrichtung bezogen auf die Folienoberfläche vor. Die formschlüssige Anpassung des Kunststoffanteils der Folie an die innere Oberfläche A' der Spritzgießform führt dazu, dass sich die plättchenförmigen Effektpigmente in dem Teil der Oberfläche A', der das dreidimensionale Muster trägt, so ausrichten, dass zusätzlich zu der lokalen Verformung des Folienkörpers auch die plättchenförmigen Effektpigmente sich in der Kunststoffmasse oder in der Druckschicht bzw. Beschichtung neu entlang des dreidimensionalen Musters orientieren und damit das dreidimensionale Muster der Oberfläche A' ebenfalls replizieren. Diese Umorientierung der Effektpigmente wird während des Erstarrungsprozesses der thermoplastischen Kunststoffmasse fixiert. Dabei kann mit masseeingefärbten thermoplastischen Folien eine deutlicher sichtbare Umorientierung der plättchenförmigen Effektpigmente erzielt werden als mit bedruckten bzw. beschichteten Folien, zumal hier mit einer Beschädigung der Oberflächengüte während des Umformens nicht gerechnet werden muss.

Glanz und Farbgebung der plättchenförmigen Effektpigmente führen zu einer besonders starken Wahrnehmung des dreidimensionalen Musters auf den Oberflächen des hergestellten polymeren Formkörpers, und zwar sowohl auf der das dreidimensionale Muster tragenden Oberfläche A" als auch, in besonders beeindruckender Weise, auch von der Seite der Oberfläche B" aus wahrnehmbar, von der aus betrachtet das dreidimensionale Muster lediglich dreidimensional erscheint, aber nicht getastet werden kann. Das sichtbare dreidimensionale Muster ist dabei deutlich ausgeprägter als es die reale Verformung der thermoplastischen Folie erwarten ließe, weil eine Auslenkung der plättchenförmigen Effektpigmente aus der parallelen Lage auch um nur wenige Winkelgrade bereits eine deutliche Änderung ihrer Reflexionseigenschaften zur Folge hat. Im jeweiligen Glanzwinkel betrachtet, bleibt der durch die Effektpigmente erzielte Glanz aber über die gesamte Fläche des von der thermoplastischen Folie gebildeten Teils des polymeren Formkörpers erhalten, und zwar sowohl bei Betrachtung von der Oberfläche A" als auch von der Oberfläche B" aus.

Gegenstand der vorliegenden Erfindung ist auch ein polymerer Formkörper mit einer Oberfläche B" und einer ein dreidimensionales Muster aufweisenden Oberfläche A", wobei die Oberfläche B" aus einem transparenten thermoplastischen Kunststoff gebildet wird und die das dreidimensionale Muster aufweisende Oberfläche A", die Erhebungen und/oder Vertiefungen aufweist, die auf einer Grundfläche das dreidimensionale Muster bilden, aus einer thermoplastischen Folie gebildet wird, die mit plättchenförmigen Effektpigmenten pigmentiert ist, wobei der transparente thermoplastische Kunststoff und die thermoplastische Folie haftfest und formschlüssig miteinander verbunden sind. Solche Formkörper können nach dem oben beschriebenen erfindungsgemäßen Spritzgießverfahren hergestellt werden.

Die stofflichen Zusammensetzungen von thermoplastischer Folie, plättchenförmigen Effektpigmenten und transparentem thermoplastischem Kunststoff sind oben bereits ausführlich beschrieben worden. Auf diese Beschreibung wird hier bezüglich des erfindungsgemäßen Formkörpers ausdrücklich Bezug genommen.

Falls der in der thermoplastischen Folie verwendete Kunststoff bzw. die in einer Druckschicht oder Beschichtung verwendeten Bindemittelsysteme mit dem Schmelzverhalten des transparenten thermoplastischen Kunststoffs, welcher die Oberfläche B" des erfindungsgemäßen Formkörpers bildet, thermisch nicht kompatibel genug sind um mittels eines einzigen Verfahrensschrittes miteinander haftfest und formschlüssig verbunden werden zu können, weist der erfindungsgemäße Formkörper vorteilhafterweise zwischen der pigmentierten thermoplastischen Folie und dem ausgehärteten, thermoplastischen Kunststoff eine haftvermittelnde Schicht auf. Diese besteht aus einem oder mehreren polymeren Kunststoffen und bildet eine unlösbare, haftfeste Verbindung zwischen der thermoplastischen Folie und dem transparenten thermoplastischen Kunststoff. Die Auswahl des geeigneten Materials kann der Fachmann nach dem jeweiligen Erfordernis an Hand seines Fachwissens treffen.

Bei dem sich auf der Oberfläche A" des erfindungsgemäßen Formkörpers befindlichen dreidimensionalen Muster aus Erhebungen und/oder Vertiefungen auf einer vorzugsweise planen Oberfläche handelt es sich um das Negativ-Muster des auf der inneren Oberfläche A' der Spritzgießteilform A befindlichen dreidimensionalen Musters.

Wie bereits vorab beschrieben, kann sich die Größe der vertikalen und horizontalen Ausdehnung des dreidimensionalen Musters auf der Oberfläche A" in breiten Bereichen bewegen, die je nach Größe und Wanddicke des polymeren Formkörpers sowie Dicke der thermoplastischen Folie und dem Verwendungszweck des dreidimensionalen Musters auf dem polymeren Formkörper (Beispiel: Codierung versus dekorativer Effekt) ausgewählt wird. Dabei stellt die Dicke der thermoplastischen Folie in der Regel die Obergrenze für die Höhe bzw. Tiefe der Erhebungen und/oder Vertiefungen in der thermoplastischen Folie dar, in Einzelfällen können diese aber auch über die Dicke der thermoplastischen Folie hinaus gehen. Das dreidimensionale Muster auf der Oberfläche A" des polymeren Formkörpers weist gemäß Anspruch 1 bzw. 9. Erhebungen und/oder Vertiefungen ab einer Höhe/Tiefe von etwa 10 µm bis hin zu einigen Zentimetern und Linienbreiten von 100 µm bis 2000 µm auf. Die flächenmäßige Ausdehnung des dreidimensionalen Musters kann sich von wenigen Quadratmillimetern bis zu einigen hundert Quadratzentimetern hin erstrecken und wird, wie die Höhe/Tiefe und Breite der Vertiefungen bzw. Erhebungen, nach den oben genannten Kriterien bemessen.

Vorzugsweise besteht das dreidimensionale Muster in der Oberfläche A" des polymeren Formkörpers lediglich aus Vertiefungen oder Erhebungen gleicher oder verschiedener Tiefe bzw. Höhe, die sich auf einer ansonsten planen Oberfläche A" befinden.

Der erfindungsgemäße polymere Formkörper ist von besonderer optischer Attraktivität, wenn die Oberfläche B" als "Schauseite" und die Oberfläche A", die das Negativ-Motiv des dreidimensionalen Musters auf der inneren Oberfläche A' der Spritzgießteilform A aufweist, als Rückseite des Körpers verwendet wird.

Da sich das auf der Oberfläche A" befindliche dreidimensionale Muster von der Oberfläche B" her betrachtet als das identische Abbild des auf der inneren Oberfläche A' der Spritzgießteilform A befindlichen dreidimensionalen Musters darstellt und die dreidimensionale Wirkung durch die in oder auf der thermoplastischen Folie befindlichen plättchenförmigen Effektpigmente und die darüber liegende transparente Kunststoffmasse optisch erheblich verstärkt wird, obwohl das dreidimensionale Muster von dieser Oberfläche her betrachtet nicht tastbar ist, sondern nur dreidimensional erscheint, wird bei dieser Betrachtungsweise eine hohe optische Attraktivität ebenso erzielt wie ein vollständiger mechanischer Schutz des dreidimensionalen Musters.

Bei dieser Ausführungsform bietet es sich zusätzlich auch an, dass sich auf der das dreidimensionale Muster tragenden Rückseite A" mindestens eine zusätzlichen Schicht befindet, die als Schutzschicht, farbverstärkende Schicht, Trägerschicht, Klebeschicht oder dergleichen ausgebildet sein kann. Geeignete Materialien und Aufbringungstechniken stehen dem Fachmann je nach Verwendungszweck dieser zusätzlichen Schicht sowie des polymeren Formkörpers zur Verfügung und bedürfen hier keiner weiteren Erläuterung.

Gegenstand der vorliegenden Erfindung ist auch die Verwendung des vorab beschriebenen polymeren Formkörpers als dekoratives und/oder funktionelles Element in Gebrauchsgütern.

Im Wesentlichen und bevorzugt handelt es sich bei den Gebrauchsgütern dabei um Verpackungen, Erzeugnisse der Elektro- und Elektronikindustrie, Haushaltsgeräte, Möbel, Bekleidung, Täschnerwaren, Schuhe, Sportartikel oder Fahrzeuge. Prinzipiell sind die erfindungsgemäßen polymeren Formkörper jedoch in allen Bereichen einsetzbar, in denen polymere Formkörper, die sich in einem Spritzgießverfahren herstellen lassen und ein gut sichtbares, attraktives dreidimensionales Muster aufweisen, welches nach Bedarf auch nicht tastbar sein kann, vorteilhaft eingesetzt werden können.

Die vorliegende Erfindung stellt ein einfaches und kostengünstiges Spritzgießverfahren zur Verfügung, mit Hilfe dessen in einem einzigen Arbeitsschritt polymere Formkörper erzeugt werden können, die auf mindestens einer ihrer Oberflächen ein optisch attraktives und bei Bedarf zusätzlich mit funktionellen Eigenschaften ausgestattetes dreidimensionales Muster aufweisen, die je nach Bedarf beidseitig verwendbar sind und von jeder ihrer Oberflächen aus betrachtet ein in seiner Farbigkeit, seinem Glanz und seiner Funktionalität variabel einstellbares uniformes optisches Erscheinungsbild ergeben, dass zusätzlich ein bedarfsgerechtes, vor Prozessbeginn einstellbares dreidimensionales Muster aufweist, welches feine Linien in hoher Präzision aufweisen kann. Das erfindungsgemäße Verfahren kann mit geringfügig modifizierten üblichen Spritzgießanlagen durchgeführt werden und ist daher kostengünstig und bedarfsgerecht anpassbar. Mit Hilfe des erfindungsgemäßen Verfahrens lassen sich auf einfache, kostengünstige Weise fließlinienfreie, komplexe Formkörper erzeugen, die eindrucksvoll mit Effektpigmenten gefärbt sind. Die erhaltenen erfindungsgemäßen Formkörper sind haltbar und weisen, zumindest in einer Ausführungsform, eine unverprägte Oberfläche von hoher optischer Attraktivität und ein praktisch zerstörungsfreies dreidimensionales Muster mit großer Linienschärfe auf. Sie sind von uniformer Farbigkeit und von hohem Glanz und variabel in vielen technischen und dekorativen Anwendungsfeldern einsetzbar.

Die Erfindung soll nachfolgend an Hand von Beispielen näher erläutert, jedoch nicht auf diese beschränkt werden.

### Beispiel 1:

Eine ABS-Folie mit einem Gehalt von 0,5 Gew.-% Colorstream® Autumn Mystery (plättchenförmiges Effektpigment auf der Basis von SiO₂-Substraten, Teilchengröße 5-50 µm, Produkt der Merck KGaA) und 0,05 Gew.% PV Echtblau A2R (Produkt der Clariant International Ltd.) mit einer Dicke von ca. 400 µm wird auf eine Größe von 100x150 mm zugeschnitten und punktuell über Klebepunkte an der inneren Oberfläche des Werkzeugeinsatzes einer Spritzgießteilform (Auswerferseite) fixiert, die als Muster ein dreidimensionales erhabenes Objekt aufweist.

Es wird eine Spritzgießmaschine vom Typ Kraus -Maffei CX-130-380 verwendet. Nach dem Schließen des Werkzeugs wird eine transparente Kunststoffschmelze (SAN Luran® 358 N, Produkt der BASF SE) in den verbleibenden Hohlraum der Spritzgießform zwischen der pigmentierten thermoplastischen Folie und der nicht mit der Folie versehenen Oberfläche der Spritzgießform (Düsenseite) eingespritzt. Der Einspritzvorgang erfolgt bei einer Temperatur im Bereich von 220 bis 260°C und einem Druck im Bereich von 450 bis 900 bar (4,5x10⁷ N/m² bis 9x10⁷ N/m²).

Nach dem Abkühlungsvorgang und dem Öffnen der Spritzgießform wird eine Kunststoffplatte erhalten, deren eine Oberfläche ein farbstarke, ebenmäßig glänzende, farblich changierende Oberfläche mit einem darin befindlichen dreidimensionalen Muster aufweist, welches dem Negativ-Motiv des in der Spritzgießform befindlichen dreidimensionalen Musters entspricht und deren andere Oberfläche eben und aus einem transparenten, farblosen Kunststoff gebildet ist. Von der Seite der transparenten Kunststoffoberfläche aus betrachtet erscheint das dreidimensionale Muster der anderen Oberfläche als Positiv-Muster hoch glänzend und mit besonderer optischer Tiefe und vermittelt den Eindruck eines hinter Glas liegenden dreidimensionalen Objektes.

### Beispiel 2:

Beispiel 1 wird wiederholt, mit der Änderung, dass eine Polystyrolfolie eingesetzt wird, die mit 1 Gew.-% Iriodin® 305 Solar Gold (plättchenförmiges Effektpigment auf Glimmerbasis, Teilchengröße 10-60µm, Produkt der Merck KGaA) pigmentiert ist. Alle anderen Parameter bleiben unverändert. Es wird eine Kunststoffplatte erhalten, die auf einer Oberfläche eine stark golden glänzende Oberflächenschicht aufweist, die mit einem dreidimensionalen Muster versehen ist. Von der gegenüber liegenden Oberfläche der Kunststoffplatte aus betrachtet erscheint das Negativbild des dreidimensonalen Musters stark glänzend mit tief goldener Farbigkeit, uniformem Glanz und hoher Tiefenwirkung.

## Patentansprüche

1. Spritzgießverfahren zur Herstellung eines polymeren Formkörpers, welcher auf mindestens einer seiner Oberflächen ein dreidimensionales Muster aufweist, wobei
- ein Spritzgießwerkzeug bereitgestellt wird, welches voneinander trennbare Spritzgießteilformen A und B aufweist, die jeweils eine innere Oberfläche A' und B' aufweisen und zusammen einen inneren Hohlraum bilden, wobei die innere Oberfläche A' Erhebungen und/oder Vertiefungen mit einer Höhe/Tiefe von mindestens 10 µm und Linienbreiten von 100 µm bis 2000 µm auf einer Grundfläche aufweist, wobei die Erhebungen und/oder Vertiefungen ein dreidimensionales Muster bilden, welches nicht mit der äußeren Form des zu erzeugenden polymeren Formkörpers übereinstimmt, der von der Spritzgießteilform A gebildet wird, und wobei bei geöffnetem Spritzgießwerkzeug
- eine thermoplastische Folie, die mit plättchenförmigen Effektpigmenten pigmentiert ist, an der Oberfläche A' fixiert wird, wobei die thermoplastische Folie mit den Effektpigmenten masseeingefärbt ist,
- das Spritzgießwerkzeug geschlossen wird,
- eine transparente thermoplastische Kunststoffschmelze in den inneren Hohlraum zwischen der thermoplastischen Folie und der Oberfläche B' der Spritzgießteilform B eingetragen wird, wobei gleichzeitig das auf der inneren Oberfläche A' vorhandene dreidimensionale Muster auf einer der Oberfläche A' zugewandten Oberfläche der thermoplastischen Folie in Form seines Negativs repliziert wird und die plättchenförmigen Pigmente sich an der Oberfläche A', die das dreidimensionale Muster trägt, neu orientieren und das dreidimensionale Muster ebenfalls replizieren,
- das Spritzgießwerkzeug temperiert oder gekühlt und nachfolgend
- der polymere Formkörper entformt oder entnommen wird.

2. Verfahren gemäß Anspruch 1, **dadurch gekennzeichnet, dass** es mindestens bei einer Temperatur durchgeführt wird, die bei oder oberhalb der Glasübergangstemperatur T_{G} der thermoplastischen Folie liegt.

3. Verfahren gemäß einem der Ansprüche 1 oder 2, **dadurch gekennzeichnet, dass** es sich bei dem dreidimensionalen Muster um ein makroskopisches Muster in Form eines figürlichen Objektes, eines alphanumerischen Motivs, eines Strich- und/oder Punktmusters, eines Logos, einer Codierung oder eines Fantasiemusters handelt.

4. Verfahren gemäß einem oder mehreren der Ansprüche 1 bis 3, **dadurch gekennzeichnet, dass** die plättchenförmigen Effektpigmente ausgewählt sind aus der Gruppe Perlglanzpigmente, Interferenzpigmente, Metalleffektpigmente, plättchenförmige funktionelle Pigmente, plättchenförmige strukturierte Pigmente, oder ein Gemisch aus diesen.

5. Verfahren gemäß einem oder mehreren der Ansprüche 1 bis 4, **dadurch gekennzeichnet, dass** die plättchenförmigen Effektpigmente eine Teilchengröße im Bereich von 5 bis 250 µm und ein Aspektverhältnis von mindestens 2 aufweisen.

6. Verfahren gemäß einem oder mehreren der Ansprüche 1 bis 5, **dadurch gekennzeichnet, dass** die plättchenförmigen Effektpigmente aus einem plättchenförmigen Substrat und einer oder mehreren Schichten auf dem Substrat bestehen, wobei sich das Substrat und die sich direkt auf dem Substrat befindliche Schicht und/oder mindestens zwei jeweils benachbarte Schichten untereinander in ihren Brechzahlen n mindestens um Δn=0,1 unterscheiden.

7. Verfahren gemäß einem oder mehreren der Ansprüche 1 bis 6, **dadurch gekennzeichnet, dass** die plättchenförmigen Effektpigmente in der pigmentierten thermoplastischen Folie in einer Menge von 0,1 bis 20 Gew.-%, bezogen auf das Gesamtgewicht der pigmentierten Folie, enthalten sind.

8. Verfahren gemäß einem oder mehreren der Ansprüche 1 bis 7, **dadurch gekennzeichnet, dass** die pigmentierte thermoplastische Folie zusätzlich zu den plättchenförmigen Effektpigmenten noch weitere organische oder anorganische Farbpigmente, Farbstoffe und/oder Füllmittel enthält.

9. Polymerer Formkörper mit einer Oberfläche B" und einer ein dreidimensionales Muster aufweisenden Oberfläche A", wobei die das dreidimensionale Muster aufweisende Oberfläche A" aus einer thermoplastischen Folie besteht, die mit plättchenförmigen Effektpigmenten masseeingefärbt ist und Erhebungen und/oder Vertiefungen mit einer Höhe/Tiefe von mindestens 10 µm und Linienbreiten von 100 µm bis 2000 µm aufweist, wobei die Erhebungen und/oder Vertiefungen auf einer Grundfläche das dreidimensionale Muster bilden, welches nicht mit der äußeren Formgebung des polymeren Formkörpers übereinstimmt, wobei die Oberfläche B" des polymeren Formkörpers transparent ist und ein dreidimensional erscheinendes Muster aufweist, welches sich aus der Orientierung der plättchenförmigen Effektpigmente entlang des dreidimensionalen Musters der Oberfläche A" ergibt, und wobei die thermoplastische Folie mit einem transparenten thermoplastischen Kunststoff haftfest und formschlüssig verbunden ist, erhalten nach einem Verfahren gemäß einem oder mehreren der Ansprüche 1 bis 9.

10. Polymerer Formkörper gemäß Anspruch 9, **dadurch gekennzeichnet, dass** sich zwischen dem transparenten thermoplastischen Kunststoff und der thermoplastischen Folie eine haftvermittelnde Schicht befindet.

11. Polymerer Formkörper gemäß einem der Ansprüche 9 oder 10, **dadurch gekennzeichnet, dass** das dreidimensionale Muster auf der Oberfläche A" ein Motiv-Negativ ist und die das dreidimensionale Muster aufweisende Oberfläche A" die Rückseite des Formkörpers darstellt.

12. Polymerer Formkörper gemäß einem oder mehreren der Ansprüche 9 bis 11, **dadurch gekennzeichnet, dass** er auf der Oberfläche A" mindestens eine zusätzliche Schicht aufweist.

13. Verwendung eines polymeren Formkörpers gemäß einem oder mehreren der Ansprüche 9 bis 12 als dekoratives und/oder funktionelles Element in Gebrauchsgütern.

14. Verwendung gemäß Anspruch 13, **dadurch gekennzeichnet, dass** es sich bei den Gebrauchsgütern um Verpackungen, Erzeugnisse der Elektro- und Elektronikindustrie, Haushaltsgeräte, Möbel, Bekleidung, Täschnerwaren, Schuhe, Sportartikel oder Fahrzeuge handelt.

## Claims

1. Injection-moulding process for the production of a polymeric moulding which has a three-dimensional pattern on at least one of its surfaces, where
- an injection mould is provided which has injection mould parts A and B, which can be separated from one another and which have an inner surface A' and B' respectively and together form an interior cavity, where inner surface A' has protuberances and/or depress-sions having a height/depth of at least 10 µm and line widths of 100 µm to 2000 µm on a base area, where the protuberances and/or depressions form a three-dimensional pattern which does not correspond to the external shape of the polymeric moulding to be produced which is formed by injection mould part A, and where, with the injection mould opened,
- a thermoplastic sheet which has been pigmented with flake-form effect pigments is fixed to surface A', where the thermoplastic sheet has been mass-coloured with the effect pigments,
- the injection mould is closed,
- a transparent thermoplastic melt is introduced into the interior cavity between the thermoplastic sheet and surface B' of injection mould part B, where at the same time the three-dimensional pattern present on inner surface A' is replicated in the form of its negative on a surface of the thermoplastic sheet facing surface A' and the flake-form pigments reorient themselves at surface A', which carries the three-dimensional pattern, and likewise replicate the three-dimensional pattern,
- the injection mould is heated or cooled, and subsequently
- the polymeric moulding is demoulded or removed.

2. Process according to Claim 1, **characterised in that** it is carried out at least at a temperature which is at or above the glass transition temperature T_{G} of the thermoplastic sheet.

3. Process according to one of Claims 1 or 2, **characterised in that** the three-dimensional pattern is a macroscopic pattern in the form of a figurative object, an alphanumeric motif, a line and/or dot pattern, a logo, a code or an abstract pattern.

4. Process according to one or more of Claims 1 to 3, **characterised in that** the flake-form effect pigments are selected from the group pearlescent pigments, interference pigments, metal-effect pigments, flake-form functional pigments, flake-form structured pigments, or a mixture thereof.

5. Process according to one or more of Claims 1 to 4, **characterised in that** the flake-form effect pigments have a particle size in the range from 5 to 250 µm and an aspect ratio of at least 2.

6. Process according to one or more of Claims 1 to 5, **characterised in that** the flake-form effect pigments consist of a flake-form substrate and one or more layers on the substrate, where the substrate and the layer located directly on the substrate and/or at least two respectively adjacent layers differ from one another in their refractive indices n at least by Δn=0.1.

7. Process according to one or more of Claims 1 to 6, **characterised in that** the flake-form effect pigments are present in the pigmented thermoplastic sheet in an amount of 0.1 to 20% by weight, based on the total weight of the pigmented sheet.

8. Process according to one or more of Claims 1 to 7, **characterised in that** the pigmented thermoplastic sheet, in addition to the flake-form effect pigments, also comprises further organic or inorganic coloured pigments, dyes and/or fillers.

9. Polymeric moulding having a surface B" and a surface A" having a three-dimensional pattern, where surface A" having the three-dimensional pattern consists of a thermoplastic sheet which has been mass-coloured with flake-form effect pigments and has protuberances and/or depressions having a height/depth of at least 10 µm and line widths of 100 µm to 2000 µm, where the protuberances and/or depressions on a base area form the three-dimensional pattern, which does not correspond to the external shape of the polymeric moulding, where surface B" of the polymeric moulding is transparent and has a pattern with a three-dimensional appearance which arises from the orientation of the flake-form effect pigments along the three-dimensional pattern of surface A", and where the thermoplastic sheet is connected adhesively and in an interlocking manner to a transparent thermoplastic, obtained by a process according to one or more of Claims 1 to 8.

10. Polymeric moulding according to Claim 9, **characterised in that** an adhesion-promoting layer is located between the transparent thermoplastic and the thermoplastic sheet.

11. Polymeric moulding according to one of Claims 9 or 10, **characterised in that** the three-dimensional pattern on surface A" is a motif negative and surface A" having the three-dimensional pattern represents the back of the moulding.

12. Polymeric moulding according to one or more of Claims 9 to 11, **characterised in that** it has at least one additional layer on surface A".

13. Use of a polymeric moulding according to one or more of Claims 9 to 12 as decorative and/or functional element in consumer goods.

14. Use according to Claim 13, **characterised in that** the consumer goods are packaging, products from the electrical and electronics industry, domestic appliances, furniture, clothing, bags, shoes, sports articles or vehicles.

## Revendications

1. Procédé de moulage par injection pour la fabrication d'un moulage en polymère qui comporte un motif tridimensionnel sur au moins l'une de ses surfaces, dans lequel
- un moule à injection est prévu, lequel comporte des parties de moule à injection A et B, lesquelles peuvent être séparées l'une de l'autre et lesquelles comportent respectivement une surface interne A' et B' et forment en association une cavité intérieure, dans lequel la surface interne A' comporte des protubérances et/ou des dépressions qui présentent une hauteur/profondeur d'au moins 10 µm et des largeurs de ligne de 100 µm à 2000 µm sur une zone de base, dans lequel les protubérances et/ou dépressions forment un motif tridimensionnel qui ne correspond pas à la forme externe du moulage en polymère qui doit être fabriqué, lequel est formé au moyen de la partie de moule à injection A, et dans lequel, tandis que le moule à injection est ouvert,
- une feuille thermoplastique qui a été pigmentée à l'aide de pigments d'effet sous forme de flocons est fixée sur la surface A', dans lequel la feuille thermoplastique a été colorée dans la masse à l'aide des pigments d'effet,
- le moule à injection est fermé,
- une matière thermoplastique transparente fondue est introduite à l'intérieur de la cavité intérieure entre la feuille thermoplastique et la surface B' de la partie de moule à injection B, dans lequel, dans le même temps, le motif tridimensionnel qui est présent sur la surface interne A' est dupliqué sous la forme de son négatif sur une surface de la feuille thermoplastique qui fait face à la surface A' et les pigments sous forme de flocons sont réorientés par eux-mêmes au niveau de la surface A', laquelle est porteuse du motif tridimensionnel, et pareillement dupliquent le motif tridimensionnel,
- le moule à injection est chauffé ou refroidi, et subséquemment
- le moulage en polymère est démoulé ou enlevé.

2. Procédé selon la revendication 1, **caractérisé en ce qu'**il est mis en œuvre au moins à une température qui est à la température de transition vitreuse T_{G} de la feuille thermoplastique ou au-delà.

3. Procédé selon l'une des revendications 1 ou 2, **caractérisé en ce que** le motif tridimensionnel est un motif macroscopique sous la forme d'un objet figuratif, un motif alphanumérique, un motif de ligne(s) et/ou de point(s), un logo, un code ou un motif abstrait.

4. Procédé selon une ou plusieurs des revendications 1 à 3, **caractérisé en ce que** les pigments d'effet sous forme de flocons sont sélectionnés parmi le groupe constitué par les pigments perlés, les pigments d'interférence, les pigments d'effet métallique, les pigments fonctionnels sous forme de flocons, les pigments structurés sous forme de flocons, ou un mélange de ceux-ci.

5. Procédé selon une ou plusieurs des revendications 1 à 4, **caractérisé en ce que** les pigments d'effet sous forme de flocons présentent une dimension de particule qui s'inscrit à l'intérieur de la plage qui va de 5 µm à 250 µm et un rapport de forme d'au moins 2.

6. Procédé selon une ou plusieurs des revendications 1 à 5, **caractérisé en ce que** les pigments d'effet sous forme de flocons sont constitués par un substrat sous forme de flocons et par une ou plusieurs couche(s) sur le substrat, dans lequel le substrat et la couche qui est localisée directement sur le substrat et/ou au moins deux couches respectivement adjacentes diffèrent l'un de l'autre ou les uns des autres du point de vue de leurs indices de réfraction n d'au moins Δn = 0,1.

7. Procédé selon une ou plusieurs des revendications 1 à 6, **caractérisé en ce que** les pigments d'effet sous forme de flocons sont présents dans la feuille thermoplastique pigmentée selon une quantité de 0,1 % à 20 % en poids, sur la base du poids total de la feuille thermoplastique pigmentée.

8. Procédé selon une ou plusieurs des revendications 1 à 7, **caractérisé en ce que** la feuille thermoplastique pigmentée, en plus des pigments d'effet sous forme de flocons, comprend également d'autres pigments colorés, colorants et/ou agents de remplissage organiques ou inorganiques.

9. Moulage en polymère comportant une surface B" et une surface A" qui comporte un motif tridimensionnel, dans lequel la surface A" qui comporte le motif tridimensionnel est constituée par une feuille thermoplastique qui a été colorée dans la masse à l'aide de pigments d'effet sous forme de flocons et qui comporte des protubérances et/ou des dépressions qui présentent une hauteur/profondeur d'au moins 10 µm et des largeurs de ligne de 100 µm à 2000 µm, dans lequel les protubérances et/ou dépressions sur une zone de base forment le motif tridimensionnel, lequel ne correspond pas à la forme externe du moulage en polymère, dans lequel la surface B" du moulage en polymère est transparente et comporte un motif qui présente une apparence tridimensionnelle qui résulte de l'orientation des pigments d'effet sous forme de flocons conjointement au motif tridimensionnel de la surface A", et dans lequel la feuille thermoplastique est connectée par adhérence et d'une manière par inter-verrouillage à un thermoplastique transparent, qui est obtenu au moyen d'un procédé selon une ou plusieurs des revendications 1 à 8.

10. Moulage en polymère selon la revendication 9, **caractérisé en ce qu'**une couche favorisant l'adhérence est localisée entre le thermoplastique transparent et la feuille thermoplastique.

11. Moulage en polymère selon l'une des revendications 9 ou 10, **caractérisé en ce que** le motif tridimensionnel sur la surface A" est un négatif et la surface A" qui comporte le motif tridimensionnel représente l'arrière du moulage.

12. Moulage en polymère selon une ou plusieurs des revendications 9 à 11, **caractérisé en ce qu'**il comporte au moins une couche additionnelle sur la surface A".

13. Utilisation d'un moulage en polymère selon une ou plusieurs des revendications 9 à 12 en tant qu'élément décoratif et/ou fonctionnel au niveau de produits de grande consommation.

14. Utilisation selon la revendication 13, **caractérisée en ce que** les produits de grande consommation sont les emballages de conditionnement, les produits issus de l'industrie électrique et électronique, les appareils électroménagers, les éléments d'ameublement, les éléments d'habillement, les sacs, les chaussures, les articles de sport ou les véhicules.
